# EUROPEAN PATENT SPECIFICATION

(11) **EP 1 365 125 B1**
(45) Date of publication and mention of the grant of the patent: **11.02.2009**
(21) Application number: 03101047.3
(22) Date of filing: 16.04.2003
(51) Int. Cl.: F02B 37/16, F01N 3/20, F01N 3/023, F02D 33/02, F02D 41/02

(54) **Method for controlling an exhaust gas temperature of a turbocharged internal combustion engine**
Verfahren zur Abgastemperatursteuerung einer aufgeladenen Brennkraftmaschine
Procédé de réglage de la température des gaz d'échappement d'un moteur à combustion interne suralimenté

(30) Priority: 21.05.2002 LU 90922
(43) Date of publication of application: 26.11.2003
(73) Proprietor: Delphi Technologies, Inc., Troy, MI 48007 (US)
(72) Inventor: GHEZZI, Olivier Bertrand, 57330, HETTANGE-GRANDE (FR); METROT, Alexandre, 54400, COSNES ET ROMAIN (FR)
(74) Representative: Robert, Vincent

(56) References cited:
- DE-A- 2 542 981
- DE-A- 4 311 904
- FR-A- 2 557 636
- US-B1- 6 276 139

## Description

### Field of the invention

The present invention generally relates to a method for controlling an exhaust gas temperature of an internal combustion engine.

### Background of the invention

In order to reduce emissions, modern car engines are equipped with exhaust after treatment devices, which treat the exhaust gases before they leave the car and remove a lot of the pollution. In particular, conventional exhaust after treatment devices for diesel engines include particulate filters, oxidation catalysts, and nitrous oxide (NOx) catalysts.

A problem associated with particulate filters is that the particulates, which consist largely of carbon particles, tend to plug the filters resulting in a restriction to the exhaust gas flow. A conventional method for regenerating/cleaning the filter involves increasing the exhaust gas temperature above a given temperature, e.g. above 450°C, depending on filter technology, to incinerate the carbon particles in the filter.

At relatively high engine speed or loads, the exhaust gases are generally at a temperature sufficient for regeneration; in this case the diesel particulate filter regeneration occurs continuously.

However, at low engine speeds or low engine load conditions, the exhaust gas temperature is generally to low to allow filter regeneration, which is problematic in case filter regeneration is required. Since, in such a case, immediate action is preferably required, methods for increasing the exhaust gas temperature are used, although they generally involve increased emissions and fuel consumption. In order to increase the temperature of the exhaust gases to regenerate a diesel particulate filter at low engine speeds or loads, it is known e.g. to delay the fuel injection timing.

DE 43 11 904 describes a method of preheating a catalytic converter. FR 2 557 636 relates to a method of controlling intake flow of in a turbocharged engine. DE 25 42 981 relates to a method of controlling charge air temperature in an internal combustion engine.

### Object of the invention

The object of the present invention is to provide an alternative way of regenerating a diesel particulate filter, and more generally of heating or preheating an exhaust after treatment device, in particular during low engine speeds or low engine load conditions.

### Summary of the invention

This object is achieved by a method as claimed in claim 1.

The turbocharger comprises a compressor mounted in an intake line of the engine for compressing intake air inducted into the engine. In the present method, to increase the exhaust gas temperature, intake air exiting the compressor is partially recirculated therein. In other words, intake air exiting the compressor-already heated up due to compression-is partially reintroduced into the compressor, thereby further increasing its temperature. This air recirculation thus results in higher intake air temperature at the compressor outlet and consequently in higher exhaust gas temperature, which permits heating up the exhaust after treatment device. It is to be noted that the present method may be implemented on both diesel and gasoline engines.

The turbocharger may comprise a turbine mounted on the same shaft as the compressor and driven by the exhaust gases as well as a governing mechanism for regulating the flow on the exhaust side, such as e.g. a variable geometry mechanism or a waste gate. In such a case, the control of the boost pressure is generally done by a closed loop regulation having as input parameters the intake manifold pressure and a predetermined boost pressure, which is a target boost pressure determined from engine speed and load. In the present method, the governing mechanism is preferably adjusted during the intake air recirculation to provide the predetermined boost pressure. In other words, the boost pressure provided during intake air recirculation is equal to the boost pressure that would be provided without intake air recirculation.

It will be understood that, to ensure a regular control of boost pressure, the quantity, respectively the flow rate, of intake air that is recirculated in the compressor should preferably be such that it is possible for the closed loop regulation to provide an intake manifold pressure corresponding to the target value, i.e. the predetermined boost pressure.

In practice, the recirculation of intake air in the compressor causes an increase in the flow of air traversing the compressor. To maintain the same level of boost, the flow cross-section through the governing mechanism will need to be reduced, which causes an increase in engine back pressure. Therefore, the injected fuel quantity is preferably increased to maintain the engine torque. This results in an increase in exhaust gas temperature, which further contributes to the increase in temperature of the exhaust gases.

In case the engine is equipped with an exhaust-gas recirculation valve, the quantity of exhaust gas recirculated into the compressor is preferably adapted to maintain the emissions of nitrous oxides (NOx) at the same level as without intake air recirculation.

The method according to the present invention may be used in a variety of methods for heating and/or pre-heating an exhaust after treatment device, such as e.g. catalytic converters or particulate filters, situated in the exhaust line, i.e. downstream of the engine exhaust valves, of a turbocharged internal combustion engine.

The present method is particularly adapted to be used for regenerating diesel particulate filters at low engine speeds and/or low engine load conditions.

The increase in intake air temperature caused by the recirculation in the compressor provides an increase in the exhaust gas temperature that enables filter regeneration. As a result, the present method may be used for regenerating a diesel particulate filter and allows particulate filters to operate more effectively when engine is idling or being operated at relatively low speeds.

Adjusting the governing mechanism and increasing the injected fuel quantity while intake air is recirculated in the compressor renders the method totally transparent to the user, who will not notice any changes in the engine behaviour due to filter regeneration.

Furthermore, the present method for controlling the exhaust gas temperature may also be used to increase the exhaust gas temperature for the preheating of catalytic converters, in both diesel and gasoline engines. Indeed, a big shortcoming of catalytic converters is that they only work at high temperature, and thus are ineffective-when the engine is started cold-in reducing the pollution during a certain period after engine start.

Increasing the temperature of the exhaust gases according to the present method thus means that hotter exhaust gases reach the catalytic converter, which heats up faster. The present method may thus be implemented following engine start up until the catalytic converter has reached its operating temperature.

### Brief description of the drawings

The present invention will now be described, by way of example, with reference to the accompanying drawings, in which:
- Fig.1:: is a schematic diagram of a diesel engine for carrying out the present method;
- Fig.2:: is a bar diagram of the exhaust gas temperature (in °C) at the diesel particulate filter in three different engine operating conditions A, B and C;
- Fig.3:: is a bar diagram of the intake air temperature (in °C) at the compressor outlet;
- Fig.4:: is a bar diagram of the position (in %) of the variable geometry mechanism of the turbocharger;
- Fig.5:: is a bar diagram of the NOx emission level (in g/h);
- Fig.6:: is a bar diagram of the position (in %) of the EGR-valve.

### Detailed description of a preferred embodiment

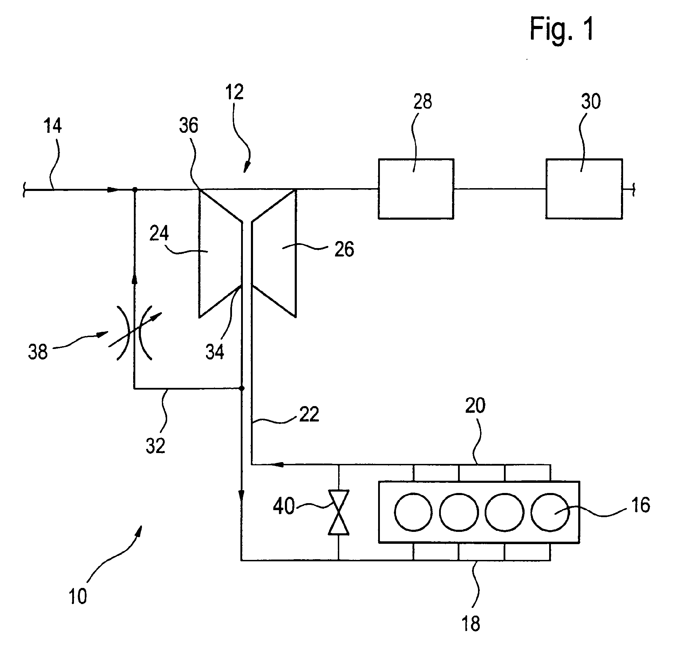

Fig.1 schematically illustrates a diesel engine, generally indicated 10, equipped with a turbocharger 12. The engine 10 has an intake line 14 for supplying air to cylinders 16 via an intake manifold 18. An exhaust manifold 20 of an exhaust line 22 is provided for collecting the exhaust gases from the cylinders 16 and expel the exhaust gases via the exhaust line 22. The turbocharger 12 includes a compressor 24 mounted in the intake line 14 for compressing intake air inducted into the engine 10. A turbine 26, mounted on the same shaft (not shown) as the compressor 24, is installed in the exhaust line 22 and driven by the exhaust gases. The compressor 12 preferably comprises a variable geometry mechanism (not shown), such as e.g. a multi-vane diffuser, for varying the flow cross-section of the exhaust gases onto the turbine 26.

Downstream of the turbine 26, a catalytic converter 28 and a diesel particulate filter 30 are installed in the exhaust line 22 to lower the exhaust gas emissions before they are expelled into the atmosphere. The catalytic converter 28 may comprise a reduction catalyst to reduce the NOx emissions and an oxidation catalyst to reduce the unburned hydrocarbons and carbon monoxide.

The diesel particulate filter 30 is provided to capture particulate matter such as carbon particles, in particular soot, in the exhaust gas. The filter 30 may be conventional in the art and may comprise a steel-wool filter, a ceramic-monolith filter, or a ceramic-coil filter or the like. It is to be noted that the filter 30 must be regenerated at certain intervals since it may become clogged with carbon particles from the exhaust gas, which results in a restriction to the exhaust flow.

Filter 30 regeneration takes places when the exhaust gases are above a given temperature, hereinafter referred to as regeneration temperature, above which the soot particles collected in the filter are burnt. When the engine runs at high speeds or loads, the exhaust gases are generally above this regeneration temperature. However, at lower engine speeds or loads, the exhaust gas temperature is generally below the regeneration temperature.

It will be appreciated that the present method for controlling the exhaust gas temperature allows increasing the exhaust gas temperature, in particular at low engine speeds or low engine load conditions. According to the present method, this is achieved by recirculating part of the intake air exiting the compressor into the compressor 24. The air exiting the compressor 24―already heated due to compression―is thus reintroduced into the compressor 24, whereby further increasing its temperature. This intake air recirculation results in higher intake air temperature at the compressor outlet, and consequently in higher exhaust gas temperature.

The intake air recirculation is carried out by means of a return pipe, indicated 32 in Fig.1, connecting the compressor outlet 34 to the compressor inlet 36. A valve 38 is mounted in the return pipe 32 for controlling the flow of air that is recirculated. The valve 38 preferably is a proportional valve, so that the quantity (or flow rate) of intake air that is recirculated can be varied by varying the flow cross-section of the valve 38. However, a simpler on/off valve, with a unique section of flow, may alternatively be used.

In Fig.1, reference sign 40 indicates an exhaust gas recirculation valve (EGR-valve). Such a valve is conventional in the art and allows to redirect part of the exhaust gases into the intake manifold 18 to reduce nitrous oxide (NOx) emissions. In the present method, the EGR-valve 40 is preferably adjusted to maintain the NOx emissions when the intake air recirculation is operated at the same level as without intake air recirculation.

In practice, the present method may be used as follows. An engine control unit (ECU) may be configured to monitor the filter 30 operating conditions, to determine whether a regeneration is required. This may be done on the basis of the pressure drop across the filter 30. As long as no regeneration is required, the valve 38 remains closed and the whole of the intake air exiting the compressor 24 is directed to the cylinders 16.

The turbocharger 12 may be conventionally controlled by a closed loop regulation having as input parameters the intake manifold pressure and a predetermined boost pressure, which is a target pressure depending on engine speed and engine load condition. The variable geometry mechanism is adjusted between a maximal flow position and a minimal flow position, in which the flow cross-section of the exhaust gases on the turbine is minimal, to provide an intake manifold pressure corresponding to the predetermined boost pressure.

In case the engine runs at low engine speed and/or load, and the ECU determines that the filter 30 must be regenerated, the ECU will advantageously implement the present method to increase the temperature of the exhaust gases so as to regenerate the filter 30.

Accordingly, the ECU will open the valve 38 to cause part of the intake air to be redirected from the compressor outlet 34 to the compressor inlet 36. As already explained, this will cause an increase in intake air temperature, and subsequently in exhaust gas temperature, thereby allowing the regeneration of filter 30.

It will be understood that this intake air recirculation causes an increase in the air flow through the compressor 24. In order to provide the predetermined boost pressure as the air flow through the compressor 24 increases, more energy is required from the turbine 26. The closed loop regulation will thus reduce the flow cross-section defined by the variable geometry mechanism, to maintain this boost pressure.

To ensure a regular control of boost pressure, the quantity of intake air that is recirculated in the compressor 24 through the return pipe 32 is preferably selected in such a way that it is possible for the closed loop regulation, by acting on the turbine governing mechanism, to provide the predetermined boost pressure. In other words, the same target boost pressure is used as if no intake air recirculation was performed.

With the turbocharger used in the engine 10 of Fig.1, which has a variable geometry turbine, the quantity of intake air that is recirculated is preferably selected in such a way that in the minimal flow position of the variable geometry mechanism, the actual boost pressure corresponds to the predetermined boost pressure.

Reducing the variable geometry mechanism results in higher expansion ratio on the turbine 26 side, and thus in higher engine back pressure. This causes a decrease in engine efficiency. Therefore, in order to provide the same engine torque that would be obtained without the intake air recirculation, the present method preferably comprises the step of increasing the injected fuel quantity. Increasing the injected fuel quantity also results in an increase in temperature of the exhaust gases.

The present method thus allows the regeneration of a diesel particulate filter 30 at low engine speeds and/or loads. In addition, increasing the injected fuel quantity when the valve 38 is open renders the method totally transparent for the user, who does not notice that the filter is being regenerated.

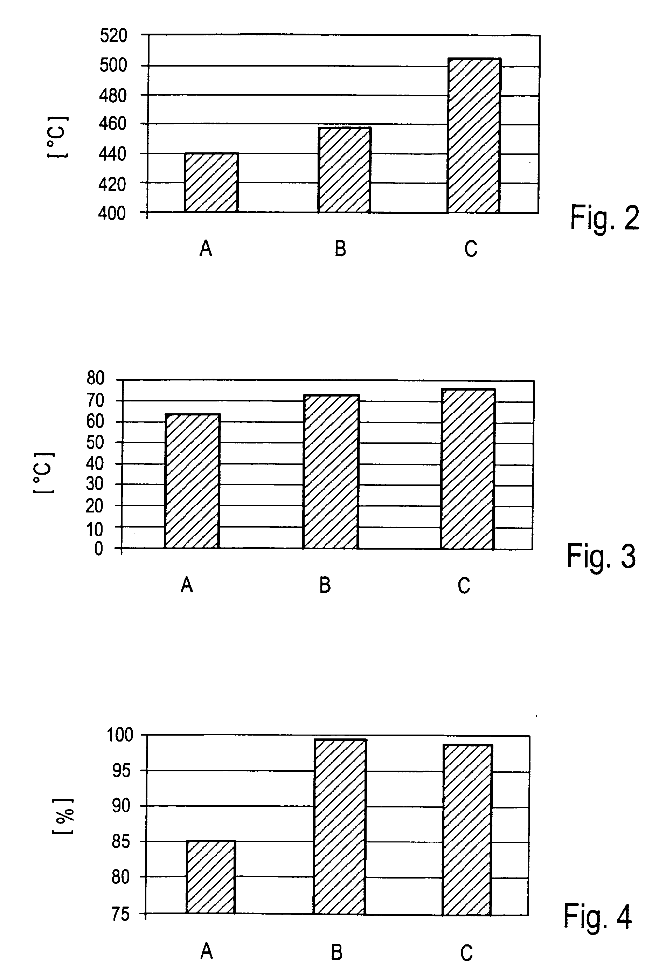

The effect of the present method will now be explained with reference to Figs.2 to 6, which show different engine parameters measured in a 1,7 litre diesel engine running at 2500 RPM with a torque of 60 N.m.

In each of Figs 2 to 6, a measured parameter value is indicated for three different engine operating conditions in the form of three bars A, B and C. Bar A indicates the measured parameter value with the valve 38 closed; bar B indicates the measured parameter value with the valve 38 open; and bar C indicates the measured parameter value in the case where the valve 38 is open and additional fuel is injected to maintain the engine torque.

Fig.2 shows the exhaust gas temperature measured at the filter 30 inlet. In the present example, the filter regeneration temperature is 450°C. As can be seen, in the conventional running conditions (i.e. valve 38 closed; bar A), the exhaust gas temperature is below 450°C and filter regeneration cannot take place. The corresponding compressor outlet temperature is about 62°C (Fig.3).

When, according to the present method, the valve 38 is opened to recirculate part of the intake air into the compressor 24, the exhaust gas temperature at the filter inlet increases up to 458°C. The exhaust gas temperature is thus above the regeneration temperature of 450°C, so that filter regeneration occurs. As can be seen from Fig.3, the intake air recirculation has caused an increase in compressor outlet temperature of about 10°C, which is about same magnitude as the difference in exhaust gas temperature in Fig.2 observed between bars A and B.

Then, in the case of operating conditions C, where the intake air recirculation is effected and the fuelling level is increased, the exhaust gas temperature increases above 500°C. The contribution of the surplus fuel in the exhaust gas temperature is clear from Figs.2 and 3, since the intake air temperature at the compressor outlet for bars B and C is approximately equal, but there is a difference of more than 40°C in the exhaust gas temperature.

Fig.4 shows the position of the variable geometry mechanism of the turbine, a position of 100% corresponding to the minimal flow position. This Figure clearly illustrates how the valve position is modified to maintain the boost pressure to the predetermined boost level. As can be seen, the quantity of intake air that is recirculated is preferably chosen so as to provide the predetermined boost pressure with the variable geometry mechanism about its minimal flow position.

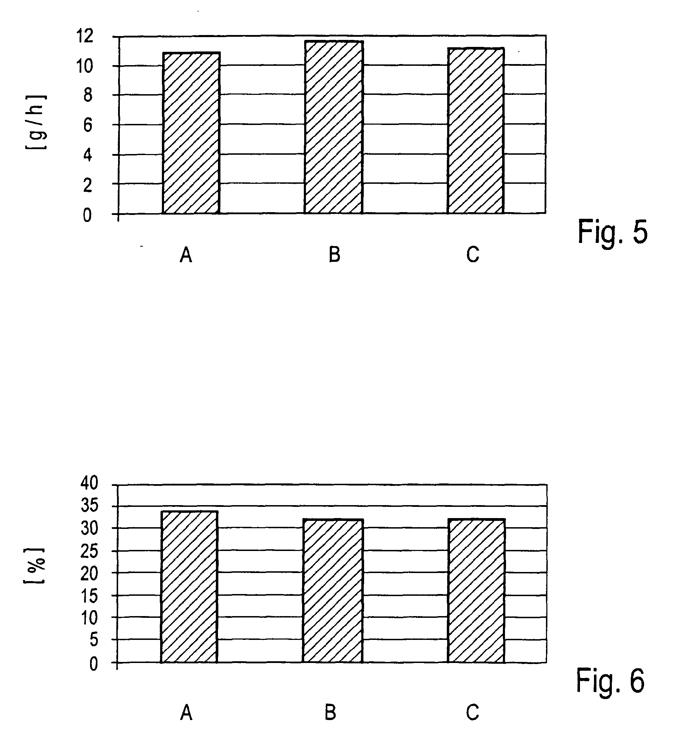

Turning finally to Figs.5 and 6, they illustrate how the EGR-valve is actuated to maintain the NOx emissions at the same level during filter regeneration as without intake air recirculation. In Fig.5, the vertical axis indicates the emission level in g/h and in Fig.5 the vertical axis indicates the percentage of opening of the EGR-valve, the valve being closed at 0 %.

It remains to be noted that the present method may also be implemented to heat up the catalytic converter 28 following engine start up, in particular when the engine is started cold. Indeed, hotter exhaust gases will thus reach the catalytic converter, which will heat up faster.

## Claims

1. A method for heating and/or pre-heating an exhaust after treatment device in an internal combustion engine, said engine being equipped with a turbocharger having a compressor in an air intake line for compressing intake air inducted into said engine **characterised in that** intake air exiting said compressor is partially recirculated in said compressor so as to increase the temperature of said exhaust gases and thereby heat up said exhaust after treatment device, whereby the same target boost pressure is maintained as if no intake air recirculation was performed.

2. The method according to claim 1, wherein said turbocharger comprises a turbine connected to said compressor and a governing mechanism upstream of said turbine, that can be adjusted for varying a flow rate of exhaust gases onto said turbine, **characterised by** the step of adjusting said governing mechanism when intake air is recirculated in said compressor to provide a predetermined boost pressure.

3. The method according to claim 2, **characterised in that** the quantity of intake air that is recirculated in said compressor is selected in such a way that said predetermined boost pressure can be obtained in the intake manifold of said engine.

4. The method according to any one of the preceding claims, **characterised by** the further step of increasing the injected fuel quantity when air is recirculated to provide an engine torque corresponding to the torque that would be obtained without intake air recirculation.

5. The method according to any one of the preceding claims, wherein said exhaust after treatment device is a catalytic converter or a diesel particulate filter.

6. Use of the method according to any one of claims 1 to 4 to regenerate a diesel particulate filter, particulates collected in said filter being burnt by hot exhaust gases.

7. Use of the method according to any one of claims 1 to 4 to pre-heat a catalytic converter.

## Patentansprüche

1. Verfahren zum Erhitzen und/oder Vorheizen einer Abgas-Nachbehandlungsvorrichtung in einer Brennkraftmaschine, wobei die Brennkraftmaschine einen Turbolader mit einem Kompressor in einer Ansaugluftleitung zum Verdichten der der Brennkraftmaschine zugeführten Ansaugluft aufweist, **dadurch gekennzeichnet, dass** ein Teil der aus dem Kompressor austretenden Ansaugluft im Kompressor rezirkuliert wird, um die Temperatur der Abgase zu erhöhen und dadurch die Abgas-Nachbehandlungsvorrichtung zu erhitzen, wodurch der gleiche Lade-Zieldruck aufrecht erhalten wird, als würde die Ansaugluft nicht rezirkuliert.

2. Verfahren nach Anspruch 1, wobei der Turbolader eine an den Kompressor und eine nachgeschaltete Steuervorrichtung angeschlossene Turbine umfasst, welche dazu eingestellt werden kann, den Abgasfluss durch die Turbine zu regeln, **dadurch gekennzeichnet, dass** die Steuervorrichtung beim Rezirkulieren der Ansaugluft im Kompressor dazu eingestellt wird, einen vorgegebenen Ladedruck bereitzustellen.

3. Verfahren nach Anspruch 2, **dadurch gekennzeichnet, dass** die Menge der im Kompressor rezirkulierten Ansaugluft solchermaßen gewählt wird, dass der vorgegebene Ladedruck im Ansaugkrümmer der Brennkraftmaschine erreicht werden kann.

4. Verfahren nach einem der vorstehend genannten Ansprüche, des Weiteren **dadurch gekennzeichnet, dass** die Menge des eingespritzten Kraftstoffs erhöht wird, wenn die Luft rezirkuliert wird, um ein Motordrehmoment bereitzustellen, das dem Drehmoment entspricht, welches ohne Rezirkulieren der Ansaugluft erzeugt werden würde.

5. Verfahren nach einem der vorstehend genannten Ansprüche, wobei die Abgas-Nachbehandlungsvorrichtung ein Katalysator oder ein Dieselpartikelfilter ist.

6. Anwendung des Verfahrens nach einem der vorstehend genannten Ansprüche 1 bis 4 zum Regenerieren eines Dieselpartikelfilters, wobei im Filter gesammelte Partikel durch heiße Abgase verbrannt werden.

7. Anwendung des Verfahrens nach einem der vorstehend genannten Ansprüche 1 bis 4 zum Vorheizen eines Katalysators.

## Revendications

1. Procédé pour chauffer et/ou préchauffer un dispositif de traitement post-échappement dans un moteur à combustion interne, ledit moteur étant équipé d'un turbocompresseur ayant un compresseur dans une ligne d'admission d'air, pour comprimer l'air admis induit dans ledit moteur, **caractérisé en ce que** l'air admis qui sort dudit compresseur est partiellement recirculé dans ledit compresseur de façon à augmenter la température desdits gaz d'échappement et ainsi chauffer ledit dispositif de traitement post-échappement, grâce à quoi on maintient la même pression de suralimentation cible que si l'on n'exécutait pas de recirculation de l'air admis.

2. Procédé selon la revendication 1, dans lequel ledit turbocompresseur comprend une turbine connectée audit compresseur, et un mécanisme de régulation en amont de ladite turbine, qui peut être ajusté pour faire varier le débit des gaz d'échappement vers ladite turbine, **caractérisé par** l'étape consistant à ajuster ledit mécanisme de régulation quand l'air admis est recirculé dans ledit compresseur pour fournir une pression de suralimentation prédéterminée.

3. Procédé selon la revendication 2, **caractérisé en ce que** la quantité d'air admis qui est recirculé dans ledit compresseur est choisie d'une telle manière que ladite pression de suralimentation prédéterminée peut être obtenue dans le collecteur d'admission dudit moteur.

4. Procédé selon l'une quelconque des revendications précédentes, **caractérisé par** l'étape supplémentaire consistant à augmenter la quantité de carburant injecté quand l'air est recirculé pour fournir un couple moteur correspondant au couple qui serait obtenu sans recirculation de l'air admis.

5. Procédé selon l'une quelconque des revendications précédentes, dans lequel ledit dispositif de traitement post-échappement est un convertisseur catalytique ou un filtre à particules diesel.

6. Utilisation du procédé selon l'une quelconque des revendications 1 à 4 pour régénérer un filtre à particules diesel, les particules collectées dans ledit filtre étant brûlées par les gaz d'échappement chauds.

7. Utilisation du procédé selon l'une quelconque des revendications 1 à 4 pour préchauffer un convertisseur catalytique.
